# EUROPÄISCHE PATENTSCHRIFT

(11) **EP 3 519 286 B1**
(45) Veröffentlichungstag und Bekanntmachung des Hinweises auf die Patenterteilung: **01.09.2021**
(21) Anmeldenummer: 17740350.8
(22) Anmeldetag: 06.07.2017
(51) Int. Cl.: B62K 25/28, B62K 25/08

(54) **MOTORRAD MIT FLUIDBETÄTIGTER ABSENKVORRICHTUNG**
MOTORCYCLE WITH FLUID ACTUATED LOWERING MECHANISM
MOTOCYCLETTE AVEC DISPOSITIF FLUIDE POUR BAISSER

(30) Priorität: 29.09.2016 DE 102016218787
(43) Veröffentlichungstag der Anmeldung: 07.08.2019
(73) Patentinhaber: Bayerische Motoren Werke Aktiengesellschaft, 80809 München (DE)
(72) Erfinder: SEIDL, Josef, 84130 Dingolfing (DE)
(86) Internationale Anmeldenummer: PCT/EP2017/066883
(87) Internationale Veröffentlichungsnummer: WO 2018/059761

(56) Entgegenhaltungen:
- EP-A1- 1 867 502
- EP-A2- 1 577 125
- DE-A1- 4 001 601
- DE-A1- 10 239 140
- US-A- 3 524 657

## Beschreibung

Die Erfindung betrifft ein Kraftfahrzeug, welches als Motorrad oder motorradähnliches Fahrzeug ausgebildet ist, mit einer mittels einer Federanordnung gefederten Radaufhängung gemäß dem Oberbegriff des Patentanspruchs 1. Aus dem Stand der Technik sind Motorräder mit höhenverstellbarem Fahrwerk bekannt, die eine Verstellung der Fahrzeughöhe mit Hilfe von einstellbaren Federbeinen beispielsweise zur Anpassung an unterschiedliche Fahrzustände ermöglichen.

So ist zum Beispiel unter der Bezeichnung "Electronic Suspension Adjustment" (kurz: ESA) und "Dynamic ESA" ein elektronisches Fahrwerk der Anmelderin bekannt. Die Verstellbarkeit bietet dem Fahrer Verbesserungen hinsichtlich Fahrsicherheit und Performance. Die Dämpfung der Federbeine wird dabei an Vorderrad und Hinterrad über elektrisch angesteuerte Regelventile angepasst, um einen deutlich verbesserten Kontakt zwischen Straße und Reifen zu erzielen. Eine Absenkung oder Anhebung der Fahrlage erfolgt hierbei durch entsprechende Justierung einer jeweiligen Federbasis.

Des Weiteren sind Verstellvorrichtungen mit einstellbaren Teleskopfedergabeln bekannt, wie zum Beispiel aus der WO 2013 / 066159 A1. Dagegen ist eine mögliche Variante einer gattungsgemäßen aktiven Hinterradfederung in der EP 1 197 361 B1 beschrieben.

Um jedoch eine sehr schnelle Verstellung der Fahrwerkshöhe zu erzielen, insbesondere eine Anhebung aus einer abgesenkten Position zurück in eine normale oder erhöhte Fahrlage, sind mit den bekannten Verstellvorrichtungen hohe Leistungen erforderlich, um die Federbeine entgegen der Schwerkraft des Fahrzeuges zu verstellen. Zudem sind die Verstellvorrichtungen teils in anderen Fahrzeugkomponenten baulich und funktional integriert.

Aufgabe der Erfindung ist es daher eine Höhenverstellung für ein Fahrzeug, welches als Motorrad oder als motorradähnliches Fahrzeug ausgebildet ist, bereitzustellen, welches eine schnelle und leichte Verstellung ermöglicht und zudem möglichst unabhängig von anderen Fahrzeugkomponenten in dem Fahrzeug vorgesehen werden kann.

Diese Aufgabe wird gelöst durch ein Kraftfahrzeug mit den Merkmalen des Patentanspruchs 1. Vorteilhafte Ausführungsformen ergeben sich aus den hiervon abhängigen Patentansprüchen.

Demnach wird ein Kraftfahrzeug bereitgestellt, welches als Motorrad oder als motorradähnliches Fahrzeug ausgebildet ist, mit einer mittels einer Federanordnung gefederten Radaufhängung, die zum Einfedern in einer Einfederrichtung und zum Ausfedern in einer entgegengesetzten Ausfederrichtung ausgebildet ist. Des Weiteren ist eine mittels eines Druckfluids wahlweise betätigbare Absenkvorrichtung vorgesehen, welche in einem aktiven Zustand zum Beaufschlagen der Radaufhängung mit einer in der Einfederrichtung gerichteten Vorlast ausgebildet ist.

Besteht also der Wunsch des Fahrers zur Absenkung der Fahrzeughöhe, so kann dieser die wahlweise betätigbare Absenkvorrichtung aktivieren. In deren aktivem Zustand wird die Radaufhängung mit einer Kraft, der Vorlast, beaufschlagt. Diese ist in Einfederrichtung der Radaufhängung gerichtet und bewirkt, dass die gefederte Radaufhängung in der Einfederrichtung um einen der Vorlast entsprechenden Einfederweg einfedert. Die Vorlast wirkt also entgegen der Ausfederrichtung der Federanordnung der Radaufhängung, so dass dementsprechend die Federanordnung durch die Vorlast komprimiert und damit verkürzt wird. Dies führt zu einer Absenkung des Fahrzeuges und einer dementsprechenden Höhenanpassung.

Mit anderen Worten beschrieben, wird durch die Vorlast eine Einfederbewegung um einen definierten Einfederweg erzwungen und ein entsprechendes Ausfedern durch die Absenkvorrichtung und die Beaufschlagung reduziert, solange die Absenkvorrichtung aktiv ist. In dem aktiven Zustand wird die Radaufhängung durch die von der Absenkvorrichtung bereitgestellte Vorlast "in die Federung" der Radaufhängung gedrückt und dort in vorgespanntem Zustand in einem Kräftegleichgewicht zwischen Vorlast und einer entgegen gerichteten Ausfederkraft der Federanordnung gehalten.

Die bereitgestellte Absenkvorrichtung ist vorzugsweise separat und unabhängig betätigbar von der Federanordnung ausgeführt und leitet die Vorlast unmittelbar in die Radaufhängung ein. Hierzu ist die Absenkvorrichtung vorzugsweise unmittelbar mit der Radaufhängung verbunden. Diese Anordnung bietet den Vorteil, dass grundsätzlich keine Veränderung oder Anpassung der üblichen Komponenten einer Radaufhängung erforderlich sind. Stattdessen kann die Absenkvorrichtung zusätzlich zu den bestehenden Komponenten, insbesondere zu der gefederten Radaufhängung, vorgesehen werden. Beispielsweise kann die Absenkvorrichtung modular ausgestaltet sein und sich so in bestehende Fahrzeuge integrieren oder auswechseln lassen.

Vorzugsweise weist die Absenkvorrichtung zu deren Betätigung eine eigene Druckfluidversorgung auf. Eine Kopplung mit anderen Druckfluidkreisläufen des Fahrzeugs ist zwar möglich, jedoch vorzugsweise nicht erforderlich.

In jedem Fall ist aufgrund der Wirkungsweise mittels der Beaufschlagung der Radaufhängung durch die Vorlast ein Absenken der Fahrzeughöhe sehr einfach und schnell durchzuführen. Gleiches gilt umgekehrt für die Rückstellung in die normale, nicht-abgesenkte Fahrzeughöhe. Diese ergibt sich durch eine Deaktivierung der Absenkvorrichtung, in der die Beaufschlagung der Radaufhängung durch die Vorlast wieder entfernt ist.

Sobald die Beaufschlagung der Radaufhängung durch die Absenkvorrichtung entfernt ist (in dem inaktiven Zustand), wirken uneingeschränkt die Rückstellkräfte der separaten Federanordnung, so dass das Fahrzeug allein durch die aus dem Einfederweg resultierende Ausfederkraft ausfedert, und sich unmittelbar und unverzüglich die ursprüngliche Fahrzeughöhe einstellen kann.

Als motorradähnliches Fahrzeug sind insbesondere alle Einspurfahrzeuge aber auch Mehrspurfahrzeuge jeweils mit entsprechender, sattelförmiger Sitzbank für den Nutzer zu verstehen, besonders bevorzugt zweirädrige, dreirädrige oder vierrädrige Motorroller beziehungsweise Scooter.

Das Druckfluid ist eine druckbeaufschlagte Flüssigkeit oder ein druckbeaufschlagtes Gas, welche/welches unter einen Überdruck gegenüber einem Umgebungsdruck gesetzt ist. Dementsprechend sind verschiedene Varianten der Absenkvorrichtung möglich, eine hydraulische oder eine pneumatische oder eine kombinierte Ausführungsform dieser beiden Varianten.

Gemäß einer Ausführungsform kann die mittels eines Druckfluids wahlweise betätigbare Absenkvorrichtung ein hydraulisch betätigbares Stellelement, insbesondere einen Hydraulikzylinder, umfassen. Durch Zuführung des druckbeaufschlagen Fluids (kurz: Druckfluid) kann das Stellelement entsprechend betätigt und eine resultierende Stellkraft bereitgestellt werden, die auf die Radaufhängung als Vorlast einwirken kann. Um der Radaufhängung weiter ein Federn, ein Aus- und Einfedern, zu ermöglichen, kann der Hydraulikzylinder außerdem federnd mit einem Fahrzeugrahmen verbunden oder weist eine federnd ausgebildete Kolbenstange auf.

Alternativ oder zusätzlich dazu kann die mittels eines Druckfluids wahlweise betätigbare Absenkvorrichtung ein pneumatisch betätigbares Stellelement, insbesondere einen Pneumatikzylinder, umfassen. Durch Zuführung des gasförmigen, druckbeaufschlagen Fluids (kurz: Druckfluid) kann das Stellelement entsprechend betätigt und eine resultierende Stellkraft bereitgestellt werden, die auf die Radaufhängung als Vorlast einwirken kann.

Des Weiteren kann die gefederte Radaufhängung als Vorderradaufhängung für mindestens ein Vorderrad ausgebildet sein, mit einem oberen Aufhängungsabschnitt und einem relativ hierzu beweglichen unteren Aufhängungsabschnitt, wobei die Federanordnung mindestens ein Feder-Dämpfer-Element umfasst, welches mit einem ersten Ende mit dem unteren Aufhängungsabschnitt und mit einem entgegengesetzten zweiten Ende mit dem oberen Aufhängungsabschnitt zum federnden Abstützen des unteren Aufhängungsabschnitts an dem oberen Aufhängungsabschnitt verbunden ist.

Beispielsweise weisen derartige Vorderradaufhängungen ein einzelnes Federbein oder eine Federgabel mit zwei Federbeinen auf. In jedem Fall ist ein dem Vorderrad zugeordneter Abschnitt, der untere Aufhängungsabschnitt, relativbeweglich und mittels des Feder-Dämpfer-Elements gefedert zu dem oberen Aufhängungsabschnitt angeordnet.

Beispielsweise kann das Stellelement mit einem ersten Ende mit dem oberen Aufhängungsabschnitt und mit einem zweiten Ende mit dem unteren Aufhängungsabschnitt zum wahlweisen Beaufschlagen der gefederten Vorderradaufhängung mit der Vorlast verbunden sein. Aufgrund der Anordnung wirkt das Stellelement im aktiven Zustand der Bewegung des Feder-Dämpfer-Elements zumindest hinsichtlich einer Ausfederbewegung entgegen und begrenzt dessen Bewegungsumfang. Zum Beispiel ist das Stellelement mit dem ersten Ende mit einer Gabelbrücke, insbesondere einer unteren Gabelbrücke, (als oberen Aufhängungsabschnitt), und mit dem zweiten Ende mit einer Gleitrohrbrücke beziehungsweise einer Tauchrohrbrücke (als unteren Aufhängungsabschnitt) verbunden.

Alternativen oder zusätzlich dazu kann die gefederte Radaufhängung als Hinterradaufhängung für mindestens ein Hinterrad ausgebildet sein und eine Hinterradschwinge umfassen, die um eine erste Drehachse drehbar mit einem Fahrzeugrahmen verbundenen ist, wobei die Federanordnung mindestens ein Feder-Dämpfer-Element umfasst, welches mit einem ersten Ende mit der Hinterradschwinge und mit einem entgegengesetzten zweiten Ende mit dem Fahrzeugrahmen zum federnden Abstützen der Hinterradschwinge verbunden ist.

Das mindestens eine Feder-Dämpfer-Element stellt beispielsweise die für den regulären Fahrbetrieb vorgesehene Federanordnung der Hinterradschwinge dar. Die Verbindung des zweiten Endes des jeweiligen Feder-Dämpfer-Elementes kann entweder unmittelbar und direkt mit dem Fahrzeugrahmen erfolgen, oder mittelbar durch ein oder mehrere zwischengeordnete Anbindungselemente, die ihrerseits unmittelbar oder mittelbar mit dem Fahrzeugrahmen verbunden sein können.

Beispielsweise kann das Stellelement mit einem ersten Ende mit dem Fahrzeugrahmen und mit einem zweiten Ende mit der Hinterradschwinge zum wahlweisen Beaufschlagen der Hinterradschwinge mit der Vorlast verbunden sein.

Zumindest in dem aktiven Zustand erfolgt somit vorzugsweise eine Abstützung der Absenkvorrichtung einerseits an dem Fahrzeugrahmen und andererseits an der Radaufhängung, sowohl im Falle einer Vorderradaufhängung als auch einer Hinterradaufhängung. Auf diese Weise wird eine durch das Stellelement erzeugte Stellkraft zur Bereitstellung der Vorlast auf die Radaufhängung genutzt, indem diese in Einfederrichtung und somit entgegen einer Rückstellkraft beziehungsweise entgegen einer Ausfederbewegung der separaten Federanordnung gerichtet ist. Im Falle eines pneumatischen Stellelementes bleibt die Federwirkung durch die Kompressibilität des Fluids erhalten. Dagegen kann hierzu im Falle eines hydraulischen Stellelementes eine Verbindung mit dem Fahrzeugrahmen oder die Kolbenstange des Stellelementes federnd ausgebildet sein.

Des Weiteren kann das Stellelement unterhalb einer Drehachse der Hinterradaufhängung positioniert sein, sodass die in Einfederrichtung gerichtete Vorlast durch eine von dem Stellelement aufgebrachte Druckkraft bereitgestellt ist. Alternativ kann das Stellelement oberhalb der Hinterradschwinge positioniert sein, sodass die in Einfederrichtung gerichtete Vorlast durch eine von dem Stellelement aufgebrachte Zugkraft bereitgestellt ist.

Selbstverständlich kann das Fahrzeug nicht nur eine Absenkvorrichtung an einer einzelnen Radaufhängung umfassen, die entweder als Vorderradaufhängung oder als Hinterradaufhängung ausgebildet ist. Vielmehr kann das Fahrzeug sowohl jeweils eine eigene Absenkvorrichtung für eine Vorderradaufhängung als auch eine eigene Absenkvorrichtung für die Hinterradaufhängung aufweisen, die jedenfalls gemäß der Beschreibung ausgebildet ist.

Unabhängig von einer Verwendung für eine Vorderradaufhängung und/oder eine Hinterradaufhängung bietet die bereitgestellte Absenkvorrichtung besondere Vorteile. Das Stellelement übt durch die eigene Druckfluid-Beaufschlagung eine Beaufschlagung der Radaufhängung, die entgegen der Federanordnung wirkt, so dass die gefederte Radaufhängung in der Einfederrichtung bewegt wird. Auf diese Weise wird das Fahrzeug abgesenkt beziehungsweise eine Fahrzeughöhe reduziert und das Fahrzeug in dieser Position gehalten, solange das Stellelement aktiv ist. Hierzu beschränkt das Stellelement in dieser Stellung einen Bewegungsumfang der Radaufhängung in der Gegenrichtung, also ein Ausfedern in der Ausfederrichtung. Dies bedeutet, dass die Radaufhängung zwar weiter einfedern, jedoch nicht über eine durch das Stellelement und die Vorlast begrenzte maximale Ausfederposition hinaus ausfedern kann. Im Falle eines pneumatischen Stellelementes bleibt die Federwirkung durch die Kompressibilität des Fluids erhalten. Dagegen kann hierzu im Falle eines hydraulischen Stellelementes eine Verbindung mit dem Fahrzeugrahmen oder die Kolbenstange des Stellelementes federnd ausgebildet sein.

Mit anderen Worten stellt das Stellelement einen definierten, einstellbaren, federnden Anschlag für die Radaufhängung dar, so dass der maximale Ausfederweg limitiert wird. Das Stellelement kann entweder in eine einzige oder eine von mehreren definierten Stellungen verstellbar sein, stufenweise oder stufenlos, um den maximalen Ausfederweg entsprechend einzustellen und zu variieren.

Ebenfalls unabhängig von einem Einsatz der Absenkvorrichtung für eine Vorderradaufhängung und/oder eine Hinterradaufhängung, kann die Absenkvorrichtung gemäß einer Ausführungsform einen fluidleitend mit dem Stellelement verbundenen Kompressor und/oder Volumenspeicher zum Betätigen des Stellelements mittels des Druckfluids umfassen. Dies bedeutet, dass das Druckfluid von dem Kompressor unter Druck gesetzt und dem Stellelement zugeführt wird. Durch die Druckbeaufschlagung des Stellelementes wird dieses betätigt und - je nach Ausgestaltung - verlängert oder verkürzt. Entsprechend bewirkt die erzeugte Druck- oder Zugkraft die Vorlast auf die verbundene Radaufhängung. Alternativ zu dem Kompressor kann der Volumenspeicher vorgesehen sein, aus dem ebenfalls ein Teil des Druckfluids dem Stellelement zugeführt oder von dem Stellelement entnommen werden kann.

Gemäß einer bevorzugten Ausführungsform weist die Absenkvorrichtung ein Ventil auf, welches in einem inaktiven Zustand der Absenkvorrichtung zum fluidleitenden Verbinden einer ersten Fluidkammer mit einer zweiten Fluidkammer des Stellelementes und/oder zum zumindest teilweisen zum Ausleiten des Druckfluids aus dem Stellelement in ein druckfreies Reservoir oder in eine Umgebung ausgebildet ist.

Dies bedeutet, dass das Stellelement im nicht inaktiven Zustand mit Hilfe des Ventils deaktiviert werden kann, indem das Ventil eine fluidleitende Verbindung zwischen einer ersten Fluidkammer und einer zweiten Fluidkammer herstellt. Auf diese Weise wird das Stellelement "kurzgeschlossen", so dass die Kolbenstange (nahezu) widerstandslos in dem Stellelement bewegt werden kann. In Abhängigkeit der Bewegungsrichtung kann das Fluid somit in einer der beiden Fluidkammern verdrängt und über das Ventil der jeweils anderen Fluidkammer zugeführt werden. Lediglich ein Strömungswiderstand in der Fluidleitung bewirkt einen geringen, vernachlässigbaren Bewegungswiderstand für das Stellelement.

Zusätzlich oder alternativ kann das Stellelement "entlüftet" und damit druckfrei geschaltet werden kann, indem zumindest ein teilweises Ausleiten des Druckfluids aus dem Stellelement in eine Umgebung in dem inaktiven Zustand der Absenkvorrichtung ermöglicht wird. Hierzu kann das Ventil eine Verbindung mit der Umgebung herstellen, um überschüssiges Fluid auszuleiten. Insbesondere bietet sich dies beim Umleiten von einer Druckkammer in die andere an, wenn das Volumen der aufnehmenden Druckkammer aufgrund einer Kolbenstange gegenüber der anderen Druckkammer reduziert ist. Die Verbindung mit der Umgebung kann beispielsweise rein optional über ein Zusatzelement in Form eines Schalldämpfers, eines Luftfilters oder eines Luft-Trockners erfolgen.

In beiden Fällen wird auf diese Weise das Stellelement bei einer Einfeder- oder Ausfederbewegung der Radaufhängung zwar passiv mitbewegt, es wird jedoch keine Gegenkraft erzeugt oder der Federweg beeinflusst. Vielmehr agiert die jeweilige Radaufhängung unbeeinflusst. Diese Ausführungsform ist - jedoch keinesfalls einschränkend - insbesondere für die Verwendung eines gasförmigen Druckfluids, also im Falle des pneumatischen Stellelementes, geeignet.

In jedem Fall wirken sich die bereitgestellten Ausführungsformen der Absenkvorrichtung vorteilhaft auf eine durch den Fahrer gewünschte Absenkung oder Rückstellung der Fahrzeughöhe auf das ursprüngliche, nicht-abgesenkte Niveau aus. Hierbei kann der durch das Stellelement gebildete "federnde Anschlag" leicht entfernt werden. Entsprechend kann das Fahrzeug dank der Federanordnung schnell ohne zusätzlich erforderliche Hilfsmittel ausfedern.

Die Erfindung wird nachfolgend anhand mehrerer Ausführungsbeispiele unter Bezugnahme auf die Zeichnungen näher erläutert. Es zeigen:
- Fig. 1: eine schematische Seitenansicht einer ersten Ausführungsform eines Motorrades gemäß der Beschreibung,
- Fig. 2: eine schematische Seitenansicht einer zweiten Ausführungsform eines Motorrades gemäß der Beschreibung,
- Fig. 3: eine schematische Seitenansicht einer ersten Ausführungsform einer Hinterradaufhängung gemäß der Beschreibung,
- Fig. 4: eine schematische Seitenansicht einer zweiten Ausführungsform einer Hinterradaufhängung gemäß der Beschreibung,
- Fig. 5: ein schematisches Schaltbild einer Ausführungsform der Absenkvorrichtung gemäß der Beschreibung, und
- Fig. 6: ein schematisches Schaltbild einer weiteren Ausführungsform einer Absenkvorrichtung gemäß der Beschreibung.

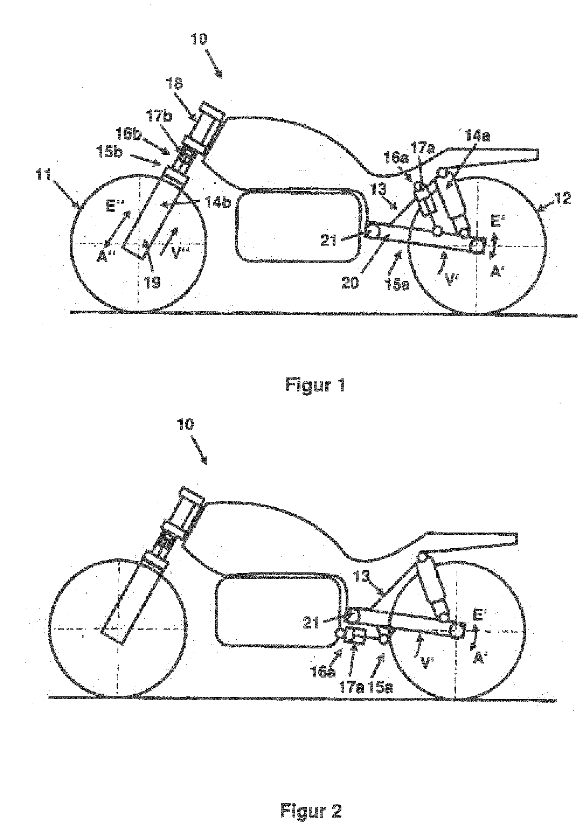

Die Figur 1 zeigt eine rein schematische Seitenansicht eines Kraftfahrzeugs in Form eines Motorrades 10 mit einem Vorderrad 11 und einem Hinterrad 12 sowie einem Fahrzeugrahmen 13. Das Motorrad 10 umfasst eine mittels einer Federanordnung 14a gefederte, hintere Radaufhängung 15a für das Hinterrad 12, also eine Hinterradaufhängung 15a. Zusätzlich umfasst das Motorrad 10 eine mittels einer zweiten Federanordnung 14b gefederte, vordere Radaufhängung 15b für das Vorderrad 11, also eine Vorderradaufhängung 15b.

Beide gefederten Radaufhängungen 15a,15b sind jeweils zum Einfedern in einer jeweiligen Einfederrichtung E',E" und zum Ausfedern in einer entgegengesetzten jeweiligen Ausfederrichtung A',A" ausgebildet. Des Weiteren ist jeder der beiden Radaufhängungen 15a,15b jeweils eine mittels eines Druckfluids wahlweise betätigbare Absenkvorrichtung 16a,16b zugeordnet. Jede der beiden Absenkvorrichtung 16a,16b ist in einem aktiven Zustand zum Beaufschlagen der zugehörigen Radaufhängung 15a,15b mit einer in der jeweiligen Einfederrichtung E',E" gerichteten Vorlast V',V" ausgebildet.

Hierzu kann die jeweilige Absenkvorrichtung 16a,16b ein Stellelement 17a,17b umfassen, beispielsweise ein hydraulisch betätigbares Stellelement, insbesondere einen Hydraulikzylinder, oder ein pneumatisch betätigbares Stellelement, insbesondere einen Pneumatikzylinder.

Die als Vorderradaufhängung 15b ausgebildete vordere Radaufhängung umfasst einen oberen Aufhängungsabschnitt 18 und einen relativ hierzu beweglichen unteren Aufhängungsabschnitt 19, wobei die Federanordnung 14b mindestens ein Feder-Dämpfer-Element umfasst, welches an einem ersten Ende mit dem unteren Aufhängungsabschnitt 19 und an einem entgegengesetzten zweiten Ende mit dem oberen Aufhängungsabschnitt 18 zum federnden Abstützen des unteren Aufhängungsabschnitts 19 an dem oberen Aufhängungsabschnitt 18 verbunden ist.

Das zugeordnete Stellelement 17b ist mit einem ersten Ende mit dem oberen Aufhängungsabschnitt 18 und mit einem zweiten Ende mit dem unteren Aufhängungsabschnitt 19 zum wahlweisen Beaufschlagen der gefederten Vorderradaufhängung 14b mit der Vorlast V" verbunden.

Dagegen umfasst die als Hinterradaufhängung 15a ausgebildete Radaufhängung 15a eine Hinterradschwinge 20, die um eine erste Drehachse 21 drehbar mit dem Fahrzeugrahmen 13 verbundenen ist, wobei die Federanordnung 14a mindestens ein Feder-Dämpfer-Element umfasst, welches mit einem ersten Ende mit der Hinterradschwinge 20 und mit einem entgegengesetzten zweiten Ende mit dem Fahrzeugrahmen 13 zum federnden Abstützen der Hinterradschwinge 20 verbunden ist.

Das zugehörige Stellelement 17a ist mit einem ersten Ende mit dem Fahrzeugrahmen 13 und mit einem zweiten Ende mit der Hinterradschwinge 20 zum wahlweisen Beaufschlagen der Hinterradschwinge 20 mit der Vorlast V' verbunden.

Wie in Fig. 1 erkennbar, ist das der Hinterradaufhängung 15a zugeordnete Stellelement 17a oberhalb der Hinterradschwinge 20 positioniert, sodass die in Einfederrichtung E' gerichtete Vorlast V' durch eine von dem Stellelement 17a aufgebrachte Zugkraft bereitgestellt wird.

Dagegen ist in Fig. 2 eine zweite Ausführungsform des Motorrades 10 dargestellt, welche im Wesentlichen identisch zu der in Fig. 1 dargestellten ersten Ausführungsform ist, so dass auf eine weitere Beschreibung der übereinstimmenden Komponenten verzichtet wird. Im Unterschied dazu ist jedoch das Stellelement 16a unterhalb der Drehachse 21 der Hinterradaufhängung 15a positioniert, sodass die in Einfederrichtung E' gerichtete Vorlast V' durch eine von dem Stellelement 17a aufgebrachte Druckkraft bereitgestellt ist. Eine Anbindung des Stellelements 17a an den Fahrzeugrahmen 13 kann entweder unmittelbar oder mittelbar über zwischengeordnete Komponenten erfolgen.

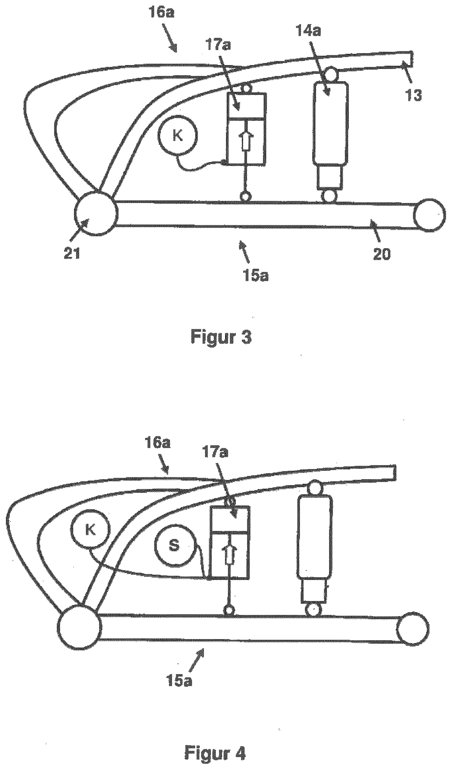

In Fig. 3 ist eine schematische Seitenansicht einer Hinterradaufhängung 15a für das in Fig. 1 dargestellte Motorrad 10 abgebildet. Gemäß der Beschreibung zu Fig. 1 ist die Hinterradschwinge 20 drehbeweglich am Fahrzeugrahmen 13 angelenkt und mit dem Feder-Dämpfer-Element der Federanordnung 14a abgestützt. Die hierzu separat ausgebildete Absenkvorrichtung 16a umfasst demnach einen fluidleitend mit dem Stellelement 17a verbundenen Kompressors K für die Zuleitung des Druckfluids, welches zu dessen Betätigung vorgesehen ist.

Fig. 4 zeigt eine weitere Ausführungsform der in Fig. 3 dargestellten Absenkvorrichtung 16a, die zusätzlich zu dem Kompressor K einen optionalen Volumenspeicher S zum Betätigen des Stellelements 17a mittels des Druckfluids umfasst. Mit Hilfe des Volumenspeichers S kann in der Absenkvorrichtung 16a ein zusätzliches Fluidvolumen aufgenommen werden, welches auch im abgesenkten Zustand des Motorrades 10 ein besonders komfortables Ansprechverhalten ermöglicht.

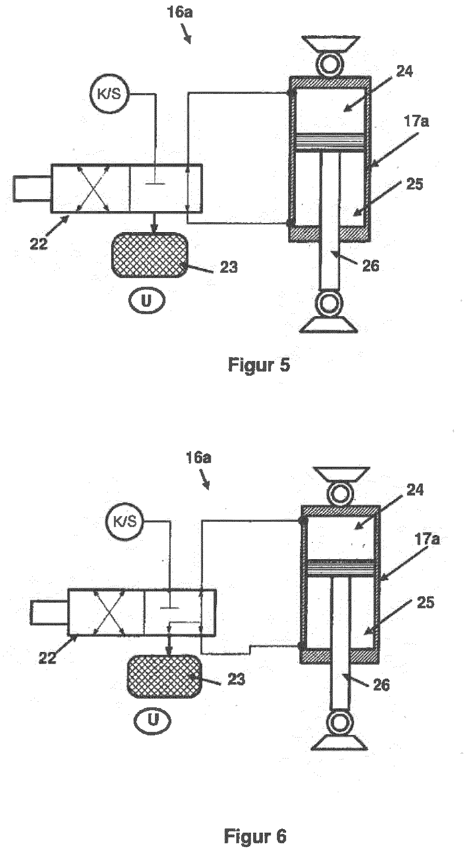

Fig. 5 zeigt in einem schematischen Schaltbild eine weitere Ausführungsform der Absenkvorrichtung 16a. Diese umfasst zusätzlich zu dem Kompressor K und dem optionalen Volumenspeicher S außerdem ein Ventil 22, welches beispielsweise in einem aktiven Zustand der Absenkvorrichtung 16a eine Zuleitung des Druckfluids an das Stellelement 17a steuert oder regelt.

Mit Hilfe des Ventils 22 kann das Stellelement 17a in einem inaktiven Zustand deaktiviert werden, indem das Ventil 22 eine Verbindung zwischen einer ersten Fluidkammer 24 und einer zweiten Fluidkammer 25 herstellt, um einen Fluidaustausch zwischen den beiden Fluidkammern 24,25 zu ermöglichen. Auf diese Weise wird das Stellelement 17a "kurzgeschlossen", so dass die Kolbenstange 26 (nahezu) widerstandslos in dem Stellelement 17a bewegt werden kann. Hierzu wird in Abhängigkeit der Bewegungsrichtung das Fluid in einer der beiden Fluidkammern verdrängt und über das Ventil der jeweils anderen Fluidkammer zugeführt. Lediglich ein Strömungswiderstand in der Fluidleitung bewirkt einen geringen Bewegungswiderstand für das Stellelement 17a.

In dem aktiven Zustand wird dagegen mit Hilfe des Ventils eine der beiden Fluidkammern, hier: die zweite Fluidkammer 25, mit dem Kompressor K und/oder dem optionalen Volumenspeicher V verbunden und somit befüllt. Die andere Fluidkammer, hier: die erste Fluidkammer 24, wird dagegen über das Ventil 22 und dessen Verbindung beispielsweise in eine Umgebung U "entlüftet". Die Verbindung mit der Umgebung U kann beispielsweise rein optional über ein Zusatzelement 23 in Form eines Schalldämpfers, eines Luftfilters oder eines Luft-Trockners erfolgen.

Fig. 6 zeigt in einem schematischen Schaltbild eine weitere Ausführungsform der Absenkvorrichtung 16a. Diese ist im Wesentlichen identisch zu der in Fig. 5 dargestellten Ausführungsform ausgestaltet, so dass auf diese Beschreibung verwiesen wird. Identische oder gleichwirkende Komponenten weisen die gleichen Bezugszeichen auf. Ein Unterschied besteht darin, dass das Ventil 22 außerdem in einem inaktiven Zustand der Absenkvorrichtung 16a zum zumindest teilweisen Ausleiten des Druckfluids aus dem Stellelement 17a in eine Umgebung U ausgebildet ist.

Mit Hilfe des Ventils 22 kann das Stellelement 17a also im inaktiven Zustand druckfrei geschaltet werden, indem das Ventil 22 eine Verbindung zwischen beiden Fluidkammern 24,25 und der Umgebung U herstellt. Auf diese Weise kann eine Druckbeaufschlagung des Druckfluids abgebaut werden, insbesondere im Falle eines gasförmigen Druckfluids. Zum Beispiel kann auf diese Weise überschüssiges Fluid ausgeleitet werden, welches beim Umleiten von der ersten 24 in die zweite Druckkammer 25 aufgrund des durch die Kolbenstange 26 reduzierten Volumens in dieser nicht aufgenommen werden kann. Die Verbindung mit der Umgebung U kann beispielsweise rein optional über ein Zusatzelement 23 in Form eines Schalldämpfers, eines Luftfilters oder eines Luft-Trockners erfolgen.

In dem aktiven Zustand kann eine Befüllung dagegen analog zu der in Fig. 5 beschrieben Art und Weise erfolgen.

## Patentansprüche

1. Kraftfahrzeug (10), welches als Motorrad oder motorradähnliches Fahrzeug ausgebildet ist, mit einer mittels einer Federanordnung (14a,14b) gefederten Radaufhängung (15a,15b), die zum Einfedern in einer Einfederrichtung (E',E") und zum Ausfedern in einer entgegengesetzten Ausfederrichtung (A',A") ausgebildet ist, sowie mit einer mittels eines Druckfluids wahlweise betätigbaren Absenkvorrichtung (16a,16b), **dadurch gekennzeichnet, dass** die Absenkvorrichtung (16a, 16b) in einem aktiven Zustand zum Beaufschlagen der Radaufhängung (15a,15b) mit einer in der Einfederrichtung (E',E") gerichteten Vorlast (V',V") ausgebildet ist.

2. Kraftfahrzeug nach Anspruch 1, **dadurch gekennzeichnet, dass** die mittels eines Druckfluids wahlweise betätigbare Absenkvorrichtung (16a,16b) ein hydraulisch betätigbares Stellelement (17a,17b), insbesondere einen Hydraulikzylinder, umfasst.

3. Kraftfahrzeug nach Anspruch 2, **dadurch gekennzeichnet, dass** hydraulisch betätigbare Stellelement (17a,17b) federnd mit einem Fahrzeugrahmen verbunden ist oder eine federnd ausgebildete Kolbenstange aufweist.

4. Kraftfahrzeug nach Anspruch 1, **dadurch gekennzeichnet, dass** die mittels eines Druckfluids wahlweise betätigbare Absenkvorrichtung (16a,16b) ein pneumatisch betätigbares Stellelement (17a,17b), insbesondere einen Pneumatikzylinder, umfasst.

5. Kraftfahrzeug nach mindestens einem der Ansprüche 2 bis 4, **dadurch gekennzeichnet, dass** die gefederte Radaufhängung (15a,15b) eine Vorderradaufhängung für mindestens ein Vorderrad (11) ist, mit einem oberen Aufhängungsabschnitt (18) und einem relativ hierzu beweglichen unteren Aufhängungsabschnitt (19), wobei die Federanordnung (14a,14b) mindestens ein Feder-Dämpfer-Element umfasst, welches mit einem ersten Ende mit dem untern Aufhängungsabschnitt (19) und mit einem entgegengesetzten zweiten Ende mit dem oberen Aufhängungsabschnitt (18) zum federnden Abstützen des unteren Aufhängungsabschnitts (19) an dem oberen Aufhängungsabschnitt (18) verbunden ist.

6. Kraftfahrzeug nach Anspruch 5, **dadurch gekennzeichnet, dass** das Stellelement (17a,17b) mit einem ersten Ende mit dem oberen Aufhängungsabschnitt (18) und mit einem zweiten Ende mit dem unteren Aufhängungsabschnitt (19) zum wahlweisen Beaufschlagen der gefederten Vorderradaufhängung (15b) mit der Vorlast (V") verbunden ist.

7. Kraftfahrzeug nach mindestens einem der Ansprüche 1 bis 6, **dadurch gekennzeichnet, dass** die gefederte Radaufhängung (15a) eine Hinterradaufhängung für mindestens ein Hinterrad (12) ist und eine Hinterradschwinge (20) umfasst, die um eine erste Drehachse (21) drehbar mit dem Fahrzeugrahmen (13) verbundenen ist, wobei die Federanordnung (14a) mindestens ein Feder-Dämpfer-Element umfasst, welches mit einem ersten Ende mit der Hinterradschwinge (20) und mit einem entgegengesetzten zweiten Ende mit dem Fahrzeugrahmen (13) zum federnden Abstützen der Hinterradschwinge (20) verbunden ist.

8. Kraftfahrzeug nach Anspruch 7, **dadurch gekennzeichnet, dass** das Stellelement (17a) mit einem ersten Ende mit dem Fahrzeugrahmen (13) und mit einem zweiten Ende mit der Hinterradschwinge (20) zum wahlweisen Beaufschlagen der Hinterradschwinge (20) mit der Vorlast (V') verbunden ist.

9. Kraftfahrzeug nach Anspruch 7 oder 8, **dadurch gekennzeichnet, dass** das Stellelement (17a) unterhalb der Drehachse (21) der Hinterradaufhängung (15a) positioniert ist, sodass die in Einfederrichtung (E') gerichtete Vorlast (V') durch eine von dem Stellelement (17a) aufgebrachte Druckkraft bereitgestellt ist, oder dass das Stellelement (17a) oberhalb der Hinterradschwinge (20) positioniert ist, sodass die in Einfederrichtung (E') gerichtete Vorlast (V') durch eine von dem Stellelement (17a) aufgebrachte Zugkraft bereitgestellt ist.

10. Kraftfahrzeug nach mindestens einem der Patentansprüche 2 bis 9, **dadurch gekennzeichnet, dass** die Absenkvorrichtung (16a,16b) einen fluidleitend mit dem Stellelement (17a,17b) verbundenen Kompressor (K) und/oder Volumenspeicher (S) zum Betätigen des Stellelements (17a,17b) mittels des Druckfluids umfasst.

11. Kraftfahrzeug nach mindestens einem der Patentansprüche 2 bis 10, **dadurch gekennzeichnet, dass** die Absenkvorrichtung (16a,16b) ein Ventil (22) aufweist, welches in einem inaktiven Zustand der Absenkvorrichtung (16a,16b) zum fluidleitenden Verbinden einer ersten Fluidkammer (24) mit einer zweiten Fluidkammer (25) des Stellelementes (17a,17b) und/oder zum zumindest teilweisen Ausleiten des Druckfluids aus dem Stellelement (17a,17b) in ein druckfreies Reservoir oder in eine Umgebung (U) ausgebildet ist.

## Claims

1. Motor vehicle (10) which is configured as a motorcycle or motorcycle-like vehicle, with a wheel suspension system (15a, 15b) which is suspended by means of a spring arrangement (14a, 14b) and is configured for compression in a compression direction (E', E'') and for rebound in an opposite rebound direction (A', A''), and with a lowering apparatus (16a, 16b) which can be actuated selectively by means of a pressure fluid, **characterized in that** the lowering apparatus (16a, 16b) is configured, in an active state, to load the wheel suspension system (15a, 15b) with a preload (V', V'') which is directed in the compression direction (A', A'').

2. Motor vehicle according to Claim 1, **characterized in that** the lowering apparatus (16a, 16b) which can be actuated selectively by means of pressure fluid comprises a hydraulically actuable actuating element (17a, 17b), in particular a hydraulic cylinder.

3. Motor vehicle according to Claim 2, **characterized in that** the hydraulically actuable actuating element (17a, 17b) is connected in a sprung manner to a vehicle frame or has a piston rod of sprung configuration.

4. Motor vehicle according to Claim 1, **characterized in that** the lowering apparatus (16a, 16b) which can be actuated selectively by means of a pressure fluid comprises a pneumatically actuable actuating element (17a, 17b), in particular a pneumatic cylinder.

5. Motor vehicle according to at least one of Claims 2 to 4, **characterized in that** the sprung wheel suspension system (15a, 15b) is a front wheel suspension system for at least one front wheel (11), with an upper suspension section (18) and a lower suspension section (19) which can be moved relative to the former, the spring arrangement (14a, 14b) comprising at least one spring/damper element which is connected by way of a first end to the lower suspension section (19) and by way of an opposite second end to the upper suspension section (18) for the sprung support of the lower suspension section (19) on the upper suspension section (18).

6. Motor vehicle according to Claim 5, **characterized in that** the actuating element (17a, 17b) is connected by way of a first end to the upper suspension section (18) and by way of a second end to the lower suspension section (19) for selectively loading the sprung front wheel suspension system (15b) with the preload (V").

7. Motor vehicle according to at least one of Claims 1 to 6, **characterized in that** the sprung wheel suspension system (15a) is a rear wheel suspension system for at least one rear wheel (12) and comprises a rear wheel swing arm (20) which is connected to the vehicle frame (13) such that it can be rotated about a first rotational axis (21), the spring arrangement (14a) comprising at least one spring/damper element which is connected by way of a first end to the rear wheel swing arm (20) and by way of an opposite second end to the vehicle frame (13) for the sprung support of the rear wheel swing arm (20).

8. Motor vehicle according to Claim 7, **characterized in that** the actuating element (17a) is connected by way of a first end to the vehicle frame (13) and by way of a second end to the rear wheel swing arm (20) for selectively loading the rear wheel swing arm (20) with the preload (V').

9. Motor vehicle according to Claim 7 or 8, **characterized in that** the actuating element (17a) is positioned below the rotational axis (21) of the rear wheel suspension system (15a), with the result that the preload (V') which is directed in the compression direction (E') is provided by way of a compressive force which is applied by the actuating element (17a), or **in that** the actuating element (17a) is positioned above the rear wheel swing arm (20), with the result that the preload (V') which is directed in the compression direction (E') is provided by way of a tensile force which is applied by the actuating element (17a).

10. Motor vehicle according to at least one of Patent Claims 2 to 9, **characterized in that** the lowering apparatus (16a, 16b) comprises a volume accumulator (S) and/or a compressor (K) which is connected in a fluid-conducting manner to the actuating element (17a, 17b) for the actuation of the actuating element (17a, 17b) by means of the pressure fluid.

11. Motor vehicle according to at least one of Patent Claims 2 to 10, **characterized in that** the lowering apparatus (16a, 16b) has a valve (22) which, in an inactive state of the lowering apparatus (16a, 16b), is configured for the fluid-conducting connection of a first fluid chamber (24) to a second fluid chamber (25) of the actuating element (17a, 17b) and/or for at least partial discharge of the pressure fluid from the actuating element (17a, 17b) into a pressure-free reservoir or into a surrounding area (U).

## Revendications

1. Véhicule automobile (10), lequel est réalisé comme motocyclette ou véhicule similaire à une motocyclette, comportant une suspension de roue (15a, 15b) suspendue sur ressort au moyen d'un ensemble ressort (14a, 14b), qui est réalisée pour se comprimer dans un sens de compression (E', E'') et pour se détendre dans un sens de détente (A', A") opposé, et comportant un dispositif d'abaissement (16a, 16b) pouvant être actionné sélectivement à l'aide d'un fluide sous pression, **caractérisé en ce que** le dispositif d'abaissement (16a, 16b) est réalisé pour, dans un état actif, solliciter la suspension de roue (15a, 15b) à l'aide d'une précharge (V', V'') orientée dans le sens de compression (E', E'').

2. Véhicule automobile selon la revendication 1, **caractérisé en ce que** le dispositif d'abaissement (16a, 16b) pouvant être actionné sélectivement à l'aide d'un fluide sous pression comporte un élément de réglage (17a, 17b) pouvant être actionné hydrauliquement, en particulier un cylindre hydraulique.

3. Véhicule automobile selon la revendication 2, **caractérisé en ce que** l'élément de réglage (17a, 17b) pouvant être actionné hydrauliquement est relié de manière élastique à un cadre de véhicule ou comprend une tige de piston réalisée de manière élastique.

4. Véhicule automobile selon la revendication 1, **caractérisé en ce que** le dispositif d'abaissement (16a, 16b) pouvant être actionné sélectivement à l'aide d'un fluide sous pression comporte un élément de réglage (17a, 17b) pouvant être actionné pneumatiquement, en particulier un cylindre pneumatique.

5. Véhicule automobile selon au moins l'une des revendications 2 à 4, **caractérisé en ce que** la suspension de roue (15a, 15b) suspendue sur ressort est une suspension de roue avant pour au moins une roue avant (11), comportant une partie de suspension supérieure (18) et une partie de suspension inférieure (19) mobile par rapport à celle-ci, l'ensemble ressort (14a, 14b) comportant au moins un élément ressort-amortisseur, lequel est relié par une première extrémité à la partie de suspension inférieure (19) et par une deuxième extrémité opposée à la partie de suspension supérieure (18) pour supporter de manière élastique la partie de suspension inférieure (19) sur la partie de suspension supérieure (18).

6. Véhicule automobile selon la revendication 5, **caractérisé en ce que** l'élément de réglage (17a, 17b) est relié par une première extrémité à la partie de suspension supérieure (18) et par une deuxième extrémité à la partie de suspension inférieure (19) pour solliciter sélectivement la suspension de roue avant (15b) suspendue sur ressort à l'aide de la précharge (V").

7. Véhicule automobile selon au moins l'une des revendications 1 à 6, **caractérisé en ce que** la suspension de roue (15a) suspendue sur ressort est une suspension de roue arrière pour au moins une roue arrière (12) et comporte un bras oscillant de roue arrière (20) qui est relié au cadre de véhicule (13) de manière rotative autour d'un premier axe de rotation (21), l'ensemble ressort (14a) comportant au moins un élément ressort-amortisseur, lequel est relié par une première extrémité au bras oscillant de roue arrière (20) et par une deuxième extrémité opposée au cadre de véhicule (13) pour supporter de manière élastique le bras oscillant de roue arrière (20).

8. Véhicule automobile selon la revendication 7, **caractérisé en ce que** l'élément de réglage (17a) est relié par une première extrémité au cadre de véhicule (13) et par une deuxième extrémité au bras oscillant de roue arrière (20) pour solliciter sélectivement le bras oscillant de roue arrière (20) à l'aide de la précharge (V').

9. Véhicule automobile selon la revendication 7 ou 8, **caractérisé en ce que** l'élément de réglage (17a) est positionné en dessous de l'axe de rotation (21) de la suspension de roue arrière (15a), de sorte que la précharge (V') orientée dans le sens de compression (E') est produite par une force de compression appliquée par l'élément de réglage (17a), ou **en ce que** l'élément de réglage (17a) est positionné au-dessus du bras oscillant de roue arrière (20), de sorte que la précharge (V') orientée dans le sens de compression (E') est produite par une force de traction appliquée par l'élément de réglage (17a).

10. Véhicule automobile selon au moins l'une des revendications 2 à 9, **caractérisé en ce que** le dispositif d'abaissement (16a, 16b) comprend un compresseur (K) et/ou un accumulateur volumétrique (S) en communication fluidique avec l'élément de réglage (17a, 17b) pour l'actionnement de l'élément de réglage (17a, 17b) à l'aide du fluide sous pression.

11. Véhicule automobile selon au moins l'une des revendications 2 à 10, **caractérisé en ce que** le dispositif d'abaissement (16a, 16b) comprend une soupape (22), laquelle est réalisée pour, dans un état inactif du dispositif d'abaissement (16a, 16b), la communication fluidique d'une première chambre de fluide (24) avec une deuxième chambre de fluide (25) de l'élément de réglage (17a, 17b) et/ou pour l'évacuation au moins partielle du fluide sous pression hors de l'élément de réglage (17a, 17b) dans un réservoir sans pression ou dans un environnement (U).
